# EUROPEAN PATENT SPECIFICATION

(11) **EP 2 865 508 B1**
(45) Date of publication and mention of the grant of the patent: **28.12.2016**
(21) Application number: 13380049.0
(22) Date of filing: 24.10.2013
(51) Int. Cl.: B29C 45/80, B29C 45/84, G01B 13/12, G01F 1/00

(54) **Detection system for detecting the position of mobile pieces in injection moulds and corresponding detection method**
Detektionssystem zur Detektion der Position beweglicher Teile in Spritzgießformen und zugehöriges Detektionsverfahren
Système de détection de position de pièces mobiles dans des moules d'injection et procédé de détection correspondant

(43) Date of publication of application: 29.04.2015
(73) Proprietor: Troqueles y Moldes de Galicia, S.A., 15890 Santiago de Compostela (ES)
(72) Inventor: Rodriguez Batalla, Ramón, E-15704 Santiago de Compostela (ES); Marqués Gallo, Higinio, E-15894 Los Tilos-Teo (La Coruña) (ES)
(74) Representative: Lehmann Novo, Maria Isabel

(56) References cited:
- GB-A- 1 366 855
- US-A- 3 482 433
- US-A- 4 580 965
- US-A- 5 244 372
- Edmunds Cages: "Air Gaging", , 18 September 1998 (1998-09-18), XP002722516, Retrieved from the Internet: URL:http://www.edmundsgages.com/pdfs/airga ge.pdf [retrieved on 2014-03-31]

## Description

### Object of the invention

The present invention refers to a detection system for detecting the position of mobile pieces in injection moulds, specifically designed to detect the correct or incorrect position of the mobile pieces in the corresponding mould, this detection being carried out prior to corresponding injection into the mould.

The object of the invention is to allow or paralyse the injection process in a mould, according to the correct or incorrect position occupied by the mobile piece or pieces inside this mould, in such a way that, should the mobile piece or pieces be in an incorrect position, the injection process is paralysed, whilst if they are in the correct position, the go ahead is given ,and the corresponding injection is allowed.

### Background of the invention

In injection moulds with mobile pieces, position detectors are used to detect the correct or incorrect position of the mobile pieces themselves and consequently, to manoeuvre the mould in the event of the piece not being in its correct position.

In order to detect this position, commercial limit switches are used, which theoretically, may be considered effective and reliable in terms of doing their job but which in practice, are problematic when the mobile pieces are small in size and when there is not enough space to house the detector in the place where these pieces are located, therefore making it necessary to place said limit switches in areas where there is more space.

Clearly, in order to achieve this, it is necessary to add other pieces to the mobile piece itself, these pieces usually being fastened with screws, with the aim of accessing the limit switch that will detect them.

Sometimes, these fastening screws break owing to their small size and to the fact that they are not very thick and detection is not easy, given that this brakeage generates an error message upon the limit switch detecting that something is in its place, although this is not the mobile place that should be there instead.

US 5244372 discloses a molding system including a mold and a molding machine adapted to monitor the position of mold element surfaces that move relative to each other to form a mold cavity. The system includes a source of gas under pressure and orifice-forming sensors on a first mold element to direct a flow of pressurized gas from the first mold element. A monitoring system monitors the condition of the gas remote from the first mold element to indicate the spacing between the first mold element and one or more adjacent mold elements as the mold elements move with respect to each other. The invention, provides a method and apparatus for verifying the proper movement and alignment of movable die members prior to the imposition of the extreme high forces of a die-casting machine, the proper position of the movable die members after the molding system is closed and prior to the introduction of molten metal, the extent and location of any misaligned surfaces of a molding die member, the unintended movement of die members during cavity-charging, and other such departures from normal operation which may lead to damage to the molding system or to the die-casting machine or to the manufacture of die-cast parts with unacceptable departures from their dimensional tolerance limits.

US-4580965 discloses a contact sensing system senses the contact of two parts, such as the closure of two die parts in a molding machine, and controls a subsequent event such as the introduce tion of fluent molding material into the mold when closure of the die parts is sensed. One of the die parts is provided with an orifice which is covered by the other die part when the mold is closed. Sensing is achieved by delivering air through the orifice using an air line and sensing the pressure increase in the line when the orifice is closed by the other die part.

US 3482433 relates to a pneumatic sensing system in which the presence, absence or proximity of some impedance adjacent to a nozzle, from which issues a flow of gas which impinges on the impedance, is sensed pneumatically. The invention chiefly relates to such sensing systems adapted to serve as so-called air gauges, that is gauges of the type in which a flow of air emerging from an orifice impinges on a workpiece or other surface, and in which the variation of the impedance offered to the flow by the workpiece is used to indicate the proximity of the workpiece to the nozzle.

The basic principles of "air gaging" can be found in Edmunds Cages "Air gaging" (1998-09-18) XP002722516. As stated therein, air gaging relies on the laws of physics which state that flow and pressure are directly proportionate to clearance and they react inversely to each other. The regulated air flows through the restriction - a needle valve, jeweled orifice, etc. - and then through the nozzle. When the nozzle is open to the atmosphere, there is maximum flow through it and there is a minimum of pressure - called "back-pressure" - between the restriction and the nozzle. As an obstruction is brought increasingly close to the front of the nozzle, air flow from the nozzle diminishes and backpressure builds. When the nozzle is completely obstructed, air flow is zero, and back-pressure reaches the pressure of the regulated air supply. During this example, air flow moved from maximum to minimum, while back-pressure moved in the opposite direction: minimum to maximum. Thus, measured decreases in flow provide an accurate correlation of the distance of the nozzles in the air gage tool to the obstruction: the surface of the workpiece being measured.

### Description of the invention

The praised system has been designed to resolve the problem set out above, by building a safety system to detect the correct position of mobile pieces in injection moulds, acting on the mobile piece directly and thereby achieving superior efficacy.

More specifically, the system object of the present invention is based on using a compressed air flow meter measuring device, this compressed air passing through a channel that flows onto the mobile piece in the mould, object of the control, in such a way that the compressed air is sent to the mobile piece via the channel into which the flow meter measuring device has been inserted, the appropriate means being linked to the same in order to send the signal corresponding to the flow captured by the measuring device, to the injection machine itself, based upon which this machine either carries out or paralyses the injection process on the mould, according to the correct position or incorrect position, respectively, of the mobile piece in said mould.

The compressed air passes through a pressure regulation valve and through a filter in which the dust particles in the air are retained, before reaching the air flow measuring device.

Therefore, the system is based on using compressed air, which is sent to the mobile piece via a channel or opening, passing through a compressed air flow meter measurer, through which the appropriate captured signal is sent to the machine, the correct position or incorrect position of the piece thereby being detected and as a result, the injection process on the mould itself being either permitted or paralysed.

The corresponding detection method based on which the position of the piece is detected to be correct or incorrect also forms an object of the invention, in such a way that if, in the former case, the compressed air does not have a way out, which causes the flow meter to measure zero, it comes to the conclusion that the piece is in its correct position, whilst if, in the latter case, the compressed air comes out towards the outside, in such a way that the flow meter measures a flow, then it is determined that the piece is not in position. In other words, by means of programming the flowstat (flow meter measuring device) accordingly, maximum and minimum set point values are established, in such a way that when the flow measured is below the minimum set value, it is taken to mean that the piece is in its correct position and conversely, when the flow measured is above the maximum set point value, it is taken to mean that the piece is not in its correct position.

### Description of the drawings

In order to complement the description below and with the aim of facilitating a better understanding of the invention characteristics, the present descriptive specification is accompanied by a set of drawings which form an integral part of the same and form a nonlimiting example thereof.
Figure 1- is a general view of the detection system for detecting the position of mobile pieces in injection moulds, all carried out in accordance with the object of the invention.
Figures 2 and 3- represent the part of the device in which the piece can be seen in its correct position and in its incorrect position, respectively.

### Preferred embodiment of the invention

As can be seen in the figures mentioned above, the system, object of the present invention, comprises a flow meter measuring device (1), referred to as the "flowstat", which in the invention, would preferably be digital and responsible for measuring a flow of compressed air reaching, via an entrance (2), passing through a pressure regulation valve (3) and an air purification filter (4), which serves to retain impurities or dust particles in the air which pass through the pressure regulation valve (3) and through the channel (5) in which the flow meter measuring device (1) is arranged and to guarantee that there is no water which could cause the pieces to rust. Downstream the flow meter measuring device (1) there is a channel (6), which, through an opening (7) communicates with the position of the mobile piece (8) located in a cavity on the injection mould (9), all of which aims to check whether this mobile piece (8) is in the correct or incorrect position, proceeding to make the corresponding injection.

It must be noted that the pressure regulation valve (3) is used so that the pressure in the circuit is approximately 2 bars, upon having calculated that the most reliable measurements are taken in this pressure environment. In other words, the pressure valve (3) regulates the air pressure at 2 bars, reducing it from 7 bars, which is the pressure that compressed air lines usually have in the majority of industrial installations.

Corresponding transmission means (10) are derived from the compressed air flow meter measuring device (1); in the figure represented by way of example they are simple cables, through which the measuring signal of the flow meter measuring device (1) is sent to the corresponding injection machine, the same receiving the appropriate order, in such a way that if this signal is apt, i.e. if it indicates that the mobile piece (8) is in correct position, then the machine proceeds to inject the mould (9) whilst if the mobile piece (8) is detected to be in an incorrect position, then the machine paralyses the mould (9) injection process.

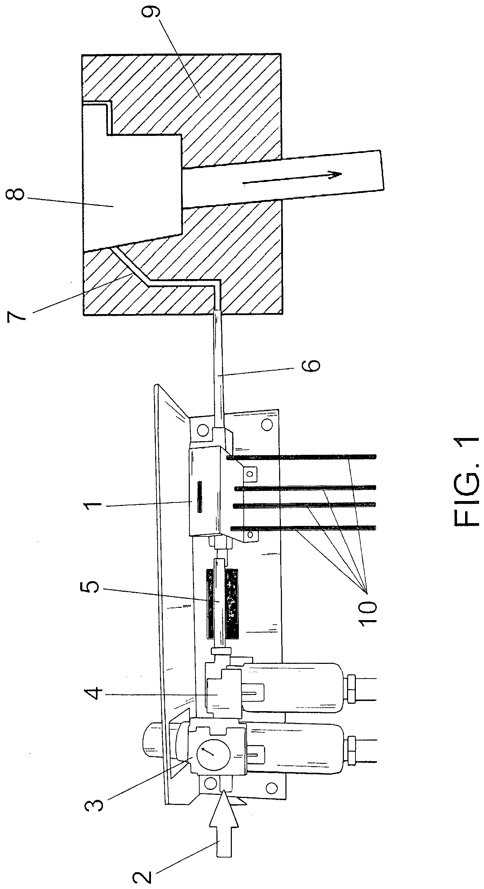

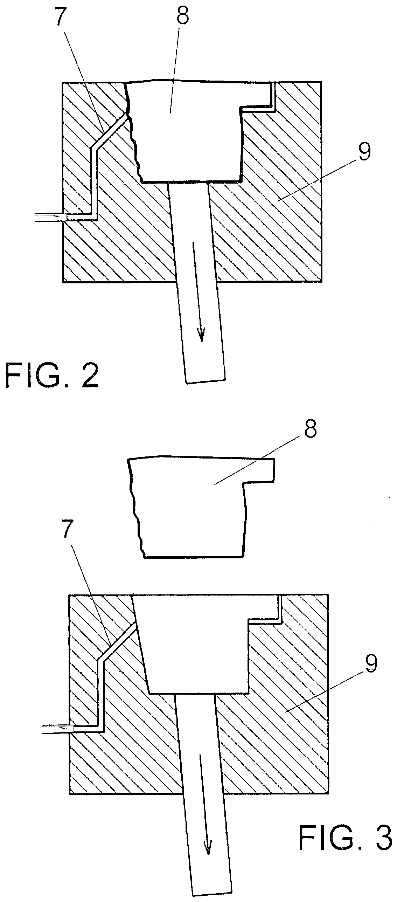

Based on figures 2 and 3, the detection method is established, in such a way that in both cases, i.e. in both figure 2 and figure 3, the compressed air enters the system at a pressure of 7 bars, corresponding, as already indicated, to a pressure usually employed in conventional industrial air networks, in such a way that based on the pressure regulation valve (3) shown in figure 1, this pressure of 7 bars is reduced to approximately 1.5 -2.5 bars, preferably 2 bars, this being ideal for the system, object of the present invention, whilst the filter (4) purifies the air before it enters the system, so that the circuit is free of impurities and water and to ensure that the pieces are not rusted.

The compressed air flow meter measurer (1) may be any kind of conventional digital equipment that may be programmed in order to provide set point value signals for a number of minimum set values when the flow is below a prefixed value (or values) and maximum set values signals, when the flow is above a prefixed value (or values). In the device object of the present invention, pieces of equipment that provide any range of nominal flow are valid, this flow naturally depending on the size of the mobile pieces to be controlled. Nevertheless, bearing in mind that small sized pieces are usually concerned, ranges of between 0.1 l/min to 100 l/m are considered appropriate. As far as minimum precision or connection unit are concerned, a value of around 0.01 l/min is considered appropriate. The device response time may vary between 50 milliseconds and 2 seconds, this value being set depending on each specific process.

It is important to highlight that although the present description always uses compressed air as the fluid whose flow is measured by the flowstat, there is no reason why the process described herein cannot be carried out using another kind of gas such as nitrogen (N₂) Argon (Ar) or carbon dioxide (CO₂), which may be preferable in certain mould injection cases.

Figure 2 demonstrates detection in which the piece (8) is indeed in position, in which case the compressed air has no way out, the flow meter (1) thereby measuring "zero" or a value close to "zero", below the minimum set point value established, thus leading to the conclusion that the piece (8) is in position.

However, in Figure 3, the piece (8) is not in position and the compressed air has a way out, the flow meter (1) thereby measuring a flow which would be above an established set point value, coming to the conclusion that the piece (8) is not in its correct position, i.e. it is positioned incorrectly.

## Claims

1. Detection system for detecting the position of mobile pieces in injection moulds, designed to detect the correct or incorrect position of a mobile piece, before proceeding to the corresponding injection process in a mould (9), **characterised in that** it comprises a flow meter measuring device (1) for a fluid that passes through a channel (5-6) leading to the cavity of the mould (9), where the mobile piece (8) is located, thereby determining that the mobile piece (8) is either in the correct or incorrect position, depending on the flow value measured.

2. Detection system for detecting the position of mobile pieces in injection moulds according to claim 1, **characterised in that** the signal corresponding to the flow captured by the flow meter measuring device (1) is sent, via the appropriate transmission means (10) to the corresponding injection machine, in order to carry out or paralyse the injection process in the mould (9) itself, in accordance with the correct or incorrect position, respectively, of the mobile piece (8) in said mould (9).

3. Detection system for detecting the position of mobile pieces in injection moulds, according to any one of the claims 1 or 2, **characterised in that** before the flow meter measuring device (1), a pressure regulator valve (3) and a purification filter (4) have been provided for.

4. Detection system for detecting the position of mobile pieces in injection moulds, according to claim 3, **characterised in that** the pressure regulation valve (3) is regulated in order to give an output pressure of approximately 1.5 - 2.5 bars, preferably 2 bars.

5. Detection system for detecting the position of mobile pieces in injection moulds, according to previous claims, **characterised in that** between the flow meter measuring device (1) and the pressure regulation valve (3), a purification filter (4) has been provided for, in order to retain impurities in the air and to retain water.

6. Detection system for detecting the position of mobile pieces in injection moulds, according to previous claims, **characterised in that** the fluid measured by the flow meter measuring device (1) is compressed air.

7. Detection system for detecting the position of mobile pieces in injection moulds according to previous claims, **characterised in that** the fluid measured by the flow meter measuring device (1) is nitrogen (N₂), Argon (Ar) or carbon dioxide (CO₂).

8. Method for detecting the position of mobile pieces in injection moulding with a detection system according to claim 1, comprising the following stages: a) measuring the fluid flow, b) comparing the flow measured with pre-fixed set point values, c) determining the correct or incorrect position of the mobile piece (8) in the injection mould (9) itself and d) beginning or stopping the mould (9) injection process.

9. Method for detecting the position of mobile pieces in injection moulding, according to the previous claim, furthermore comprising a pressure regulation stage prior to the fluid flow measuring stage.

10. Method for detecting the position of mobile pieces in injection moulding, according to claims 8 and 9, furthermore comprising a purification stage for the fluid to be measured following the pressure regulation stage and prior to the fluid flow measuring stage.

11. Method for detecting the position of mobile pieces in injection moulding, according to claims 8-10, **characterised in that** when the fluid flow value measured is "zero" (without a way out for the fluid) or a value below a pre-fixed set point value, the mobile piece (8) is considered to be in correct position in the mould (9).

12. Method for detecting the position of mobile pieces in injection moulding, according to claims 8-10, **characterised in that** when the fluid flow value measured is above a pre-fixed set point value, the mobile piece (8) is considered not to be in its correct position in the mould (9).

## Patentansprüche

1. Erkennungssystem zum Erkennen der Position beweglicher Teile in Spritzgießformen, das geeignet ist, die richtige oder falsche Position eines beweglichen Teils zu erkennen, bevor zu dem entsprechenden Spritzgießprozess in einer Gießform (9) weitergegangen wird, **dadurch gekennzeichnet, dass** das System eine Messvorrichtung zur Durchflussmessung (1) für ein Medium umfasst, das einen Kanal (5 - 6) durchläuft, der zu dem Hohlraum der Gießform (9) führt, wo das bewegliche Teil (8) angebracht ist, wodurch abhängig von dem gemessenen Durchflusswert ermittelt wird, ob das bewegliche Teil (8) entweder in der richtigen oder in der falschen Position ist.

2. Erkennungssystem zum Erkennen der Position beweglicher Teile in Spritzgießformen nach Anspruch 1, **dadurch gekennzeichnet, dass** das Signal, das dem durch die Messvorrichtung zur Durchflussmessung (1) erfassten Durchfluss entspricht, über ein geeignetes Übertragungselement (10) an die entsprechende Spritzgießmaschine gesendet wird, um den Spritzgießprozess in der eigentlichen Gießform (9) gemäß der richtigen bzw. falschen Position des beweglichen Teils (8) in der Gießform (9) auszuführen bzw. anzuhalten.

3. Erkennungssystem zum Erkennen der Position beweglicher Teile in Spritzgießformen nach einem der Ansprüche 1 oder 2, **dadurch gekennzeichnet, dass** vor der Messvorrichtung zur Durchflussmessung (1) ein Druckreglerventil (3) und ein Reinigungsfilter (4) bereitgestellt werden.

4. Erkennungssystem zum Erkennen der Position beweglicher Teile in Spritzgießformen nach Anspruch 3, **dadurch gekennzeichnet, dass** das Druckreglerventil (3) geregelt wird, um einen Ausgangsdruck von ungefähr 1,5 - 2,5 Bar, vorzugsweise von 2 Bar auszugeben.

5. Erkennungssystem zum Erkennen der Position beweglicher Teile in Spritzgießformen nach einem der vorhergehenden Ansprüche, **dadurch gekennzeichnet, dass** zwischen der Messvorrichtung zur Durchflussmessung (1) und dem Druckreglerventil (3) ein Reinigungsfilter (4) bereitgestellt wird, um Verschmutzungen in der Luft zurückzuhalten und um Wasser zurückzuhalten.

6. Erkennungssystem zum Erkennen der Position beweglicher Teile in Spritzgießformen nach einem der vorhergehenden Ansprüche, **dadurch gekennzeichnet, dass** das von der Messvorrichtung zur Durchflussmessung (1) gemessene Medium komprimierte Luft ist.

7. Erkennungssystem zum Erkennen der Position beweglicher Teile in Spritzgießformen nach einem der vorhergehenden Ansprüche, **dadurch gekennzeichnet, dass** das von der Messvorrichtung zur Durchflussmessung (1) gemessene Medium Stickstoff (N₂), Argon (Ar) oder Kohlenstoffdioxid (CO₂) ist.

8. Verfahren zum Erkennen der Position beweglicher Teile beim Spritzgießen mit einem Erkennungssystem nach Anspruch 1, das die folgenden Schritte umfasst: a) Messen des Mediumdurchflusses, b) Vergleichen des gemessenen Durchflusses mit vorbestimmten Sollwerten, c) Ermitteln der richtigen oder falschen Position des beweglichen Teils (8) in der eigentlichen Spritzgießform (9) und d) Beginnen oder Anhalten des Spritzgießprozesses in der Gießform (9).

9. Verfahren zum Erkennen der Position beweglicher Teile beim Spritzgießen nach dem vorhergehenden Anspruch, der außerdem vor dem Schritt des Messens des Mediumdurchflusses einen Schritt zum Regeln des Drucks umfasst.

10. Verfahren zum Erkennen der Position beweglicher Teile beim Spritzgießen nach Anspruch 8 oder 9, der außerdem nach dem Schritt des Regelns des Drucks und vor dem Schritt des Messens des Mediumdurchflusses einen Schritt zum Reinigen des zu messenden Mediums umfasst.

11. Verfahren zum Erkennen der Position beweglicher Teile beim Spritzgießen nach einem der Ansprüche 8 bis 10, **dadurch gekennzeichnet, dass**, wenn der gemessene Durchflusswert des Mediums "Null" ist (ohne einen Ausweg für das Medium) oder ein Wert unter einem vorbestimmten Sollwert ist, angenommen wird, dass sich das bewegliche Teil (8) in der Gießform (9) in der richtigen Position befindet.

12. Verfahren zum Erkennen der Position beweglicher Teile beim Spritzgießen nach einem der Ansprüche 8 bis 10, **dadurch gekennzeichnet, dass**, wenn der gemessene Durchflusswert des Mediums über einem vorbestimmten Sollwert liegt, angenommen wird, dass sich das bewegliche Teil (8) in der Gießform (9) nicht in seiner richtigen Position befindet.

## Revendications

1. Système de détection pour détecter la position de pièces mobiles dans des moules à injection, conçu pour détecter la position correcte ou incorrecte d'une pièce mobile, avant de procéder au procédé d'injection correspondant dans un moule (9), **caractérisé en ce qu'**il comprend un dispositif de mesure de débitmètre (1) pour un fluide qui passe à travers un canal (5-6) menant à la cavité du moule (9), dans laquelle la pièce mobile (8) est située, ce qui permet de déterminer que la pièce mobile (8) est soit dans la bonne position, soit dans une position incorrecte, en fonction de la valeur d'écoulement mesurée.

2. Système de détection pour détecter la position de pièces mobiles dans des moules à injection selon la revendication 1, **caractérisé en ce que** le signal correspondant à l'écoulement capturé par le dispositif de mesure de débitmètre (1) est envoyé, par le biais du moyen de transmission approprié (10), à la machine d'injection correspondante afin d'effectuer, ou de paralyser, le procédé d'injection dans le moule (9) lui-même, en fonction de la position correcte ou incorrecte, respectivement, de la pièce mobile (8) dans ledit moule (9).

3. Système de détection pour détecter la position de pièces mobiles dans des moules à injection selon l'une quelconque des revendications 1 ou 2, **caractérisé en ce que**, avant le dispositif de mesure de débitmètre (1), une vanne de régulation de pression (3) et un filtre de purification (4) ont été disposés.

4. Système de détection pour détecter la position de pièces mobiles dans des moules à injection selon la revendication 3, **caractérisé en ce que** la vanne de régulation de pression (3) est régulée afin de donner une pression de sortie comprise approximativement entre 1,5 et 2,5 bars, de préférence 2 bars.

5. Système de détection pour détecter la position de pièces mobiles dans des moules à injection selon des revendications précédentes, **caractérisé en ce que**, entre le dispositif de mesure de débitmètre (1) et la vanne de régulation de pression (3), un filtre de purification (4) a été disposé afin de retenir des impuretés dans l'air et de retenir de l'eau.

6. Système de détection pour détecter la position de pièces mobiles dans des moules à injection selon des revendications précédentes, **caractérisé en ce que** le fluide mesuré par le dispositif de mesure de débitmètre (1) est de l'air comprimé.

7. Système de détection pour détecter la position de pièces mobiles dans des moules à injection selon des revendications précédentes, **caractérisé en ce que** le fluide mesuré par le dispositif de mesure de débitmètre (1) est l'azote (N₂), l'argon (Ar) ou le dioxyde de carbone (CO₂).

8. Procédé pour détecter la position de pièces mobiles lors d'un moulage par injection avec un système de détection selon la revendication 1, comprenant les étapes suivantes consistant à : a) mesurer l'écoulement du fluide ; b) comparer l'écoulement mesuré avec des valeurs de point de consigne prédéfinies ; c) déterminer la position correcte ou incorrecte de la pièce mobile (8) dans le moule à injection (9) lui-même et d) commencer ou arrêter le procédé d'injection du moule (9).

9. Procédé pour détecter la position de pièces mobiles lors d'un moulage par injection selon la revendication précédente, comprenant en outre une étape de régulation de pression avant l'étape de mesure de l'écoulement du fluide.

10. Procédé pour détecter la position de pièces mobiles lors d'un moulage par injection selon les revendications 8 et 9, comprenant en outre une étape de purification pour le fluide qui doit être mesuré après l'étape de régulation de pression et avant l'étape de mesure de l'écoulement du fluide.

11. Procédé pour détecter la position de pièces mobiles lors d'un moulage par injection selon les revendications 8 à 10, **caractérisé en ce que**, lorsque la valeur d'écoulement du fluide mesurée est « zéro » (sans chemin de sortie pour le fluide) ou une valeur inférieure à une valeur de point de consigne prédéfinie, la pièce mobile (8) est considérée être en position correcte dans le moule (9).

12. Procédé pour détecter la position de pièces mobiles lors d'un moulage par injection selon les revendications 8 à 10, **caractérisé en ce que**, lorsque la valeur d'écoulement du fluide mesurée est supérieure à une valeur de point de consigne prédéfinie, la pièce mobile (8) est considérée ne pas être dans sa position correcte dans le moule (9).
